(19) Europäisches Patentamt
European Patent Office
Office européen des brevets

(11) **EP 3 850 616 B1**

(12) **FASCICULE DE BREVET EUROPEEN**

(45) Date de publication et mention de la délivrance du brevet:
**21.06.2023 Bulletin 2023/25**

(21) Numéro de dépôt: **19786374.9**

(22) Date de dépôt: **09.09.2019**

(51) Classification Internationale des Brevets (IPC):
*G10K 11/172* (2006.01)  *B32B 3/12* (2006.01)
*B32B 3/26* (2006.01)  *B32B 5/02* (2006.01)
*B32B 15/20* (2006.01)  *F02C 7/045* (2006.01)
*F02K 1/82* (2006.01)

(52) Classification Coopérative des Brevets (CPC):
**G10K 11/172; B32B 3/12; B32B 3/266; B32B 5/02; B32B 15/20; F02C 7/045; F02K 1/827;** B32B 2260/02; B32B 2260/046; B32B 2307/102; B32B 2605/18; F05D 2250/131; F05D 2250/141; F05D 2260/963; Y02T 50/60

(86) Numéro de dépôt international:
**PCT/FR2019/052078**

(87) Numéro de publication internationale:
**WO 2020/053514 (19.03.2020 Gazette 2020/12)**

(54) **PANNEAU DE TRAITEMENT ACOUSTIQUE POUR TURBORÉACTEUR**

SCHALLDÄMMPLATTE FÜR EIN TURBOSTRAHLTRIEBWERK

ACOUSTIC TREATMENT PANEL FOR A TURBOJET ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2018 FR 1858101**

(43) Date de publication de la demande:
**21.07.2021 Bulletin 2021/29**

(73) Titulaire: **SAFRAN AIRCRAFT ENGINES**
**75015 Paris (FR)**

(72) Inventeurs:
• RIOU, Georges, Jean, Xavier
**77550 MOISSY-CRAMAYEL (FR)**
• GONZALEZ, Jéremy, Paul, Francisco
**77550 MOISSY-CRAMAYEL (FR)**
• MARDJONO, Jacky, Novi
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**US-A- 3 887 031    US-A1- 2015 041 247**

EP 3 850 616 B1

## Description

Arrière-plan de l'invention

L'invention concerne un panneau de traitement acoustique pour l'absorption d'ondes sonores, et plus particulièrement une cellule d'absorption acoustique d'un panneau de traitement acoustique pour l'absorption d'ondes sonores à basses et moyennes fréquences.

Les cellules d'absorption acoustique sont destinées à réduire les bruits indésirables. Cette réduction est faite pour diverses raisons, par exemple pour protéger l'oreille humaine contre les dommages ou pour réduire l'impact du bruit. Dans les équipements et pièces techniques, une protection acoustique peut être nécessaire pour les protéger des dommages (fatigue sonore). La fatigue sonore peut se produire, par exemple, sur les volets d'atterrissage des avions à proximité des moteurs, ou sur les composants de charge utile des systèmes de lancement spatial, en raison du bruit important généré lors du lancement.

Classiquement, la réduction du bruit d'un turboréacteur, et plus précisément celui rayonné par l'interaction entre les rotors et leurs environnements, est réalisée à l'aide de panneaux absorbants disposés au niveau des surfaces mouillées des conduits dans lesquels se propagent les ondes sonores. On entend par surfaces mouillées, les surfaces en contact avec un écoulement fluide. Ces panneaux sont des matériaux composites de type sandwich emprisonnant un nid d'abeille, dont les propriétés absorbantes sont en partie obtenues grâce au principe des résonateurs de Helmholtz formés par les alvéoles du nid d'abeille formant des cellules d'absorption acoustique.

Un résonateur de Helmholtz est constitué d'une cavité résonante et d'un ou plusieurs col(s) s'étendant à l'intérieur de la cavité chacun depuis un orifice formé dans une paroi et permettant à la cavité résonante de communiquer avec le milieu environnant dans lequel se propagent les ondes à atténuer. Le col assure ainsi la communication entre le milieu ambiant et la cavité d'air interne. Une fois le dispositif optimisé, le col assure un effet de dissipation visco-thermique, qui correspond à un mouvement rapide et alterné des ondes sonores au travers des cols provoquant de la dissipation par frottement.

Dans les technologies de traitement classique, la longueur du col est faible devant la hauteur de la cavité. Plus précisément, dans les technologies classiques, la longueur du col est égale à l'épaisseur d'une paroi en tôle composite (carbone + résine) qui constitue la surface mouillée du traitement, car le col est obtenu par simple perforation de cette paroi. On optimise le fonctionnement du résonateur de Helmholtz en dimensionnant la cavité d'air de façon à obtenir le maximum de vitesse acoustique au niveau du col. Cette optimisation impose des hauteurs de cavité de l'ordre du quart de la longueur d'onde de la fréquence principale à traiter. Ce qui représente pour une onde sonore à une fréquence de 100 Hz dans l'air ambient ayant donc une longueur d'onde de 3,4 m, une hauteur de cavité nécessaire de :

$$\frac{\lambda}{4} = \frac{3.4}{4} = 0.85m$$

Elle offre par ailleurs des propriétés très intéressantes quant à l'importante largeur de bande fréquentielle couverte.

Cependant, les tendances actuelles pour l'optimisation des systèmes de propulsion sont orientées vers la diminution des nombres d'aubes et la réduction de la vitesse de rotation des ensembles tournants tel que le fan. Il en résulte un abaissement des fréquences du rayonnement acoustique.

L'optimisation des panneaux de traitement nécessite alors l'augmentation de leur épaisseur pour pouvoir augmenter la hauteur de la cavité et ainsi diminuer la fréquence d'accord des cavités résonantes des panneaux. Cela rend les panneaux incompatibles avec les contraintes de masse et d'encombrement associées aux nouvelles architectures de type UHBR (Ultra High Bypass Ratio), c'est-à-dire à très fort taux de dilution.

En effet, avec des tailles de nacelles dites minces et une signature acoustique démarrant à des fréquences particulièrement basses, les turboréacteurs à très fort taux de dilution nécessitent l'utilisation de revêtements acoustiques spécifiques. Plus précisément, en complément des structures absorbantes classiques traitant les moyennes et hautes fréquences, il y a un besoin de traitement acoustique pouvant atténuer efficacement les fréquences basses de l'ordre de 500 à 800 Hz avec des panneaux de traitement acoustique présentant un encombrement réduit.

Il est toujours possible de dimensionner le résonateur de Helmholtz de sorte qu'il soit efficace sur des fréquences plus basses, pour un encombrement radial réduit, par exemple, en jouant à la fois sur la hauteur du col et sur le volume de la cavité résonante.

La contrepartie, pour ce type de dimensionnement sous contrainte d'un encombrement réduit donné, est que la bande de fréquence sur laquelle agit le traitement de manière optimale se trouve drastiquement réduite lorsque la fréquence diminue.

Cette restriction concernant la largeur de bande fréquentielle d'atténuation est très pénalisante, car la variation du régime de la soufflante selon les phases de vol et la masse de l'avion engendre des évolutions importantes de sa fréquence d'émission sonore. De ce fait, le traitement dimensionné de cette façon ne sera efficace que pour une plage de régime extrêmement étroite.

Une solution connue pour atténuer des fréquences très basses avec des résonateurs relativement minces est d'insérer un large pavillon de forme conique ou hyperbolique dans une cavité ajustée aux dimensions de ce pavillon, l'objectif étant ici d'accroître la distance parcourue par l'onde sonore dans la cavité résonante.

Une application aéronautique des cellules d'absorption acoustique nécessite de réaliser un tel pavillon avec une épaisseur de paroi de pavillon très mince de l'ordre de 0,1 à 0,2 mm. Cependant, les niveaux d'excitation acoustique importants, de l'ordre de 140 à 150 dB, et les vibrations mécaniques potentielles engendrées par le moteur, ne permettent pas à un pavillon ayant des parois d'une telle épaisseur de rester suffisamment rigide pour conserver sa géométrie et fonctionner de manière optimale.

Le document US 3887031 divulgue une cellule d'absorption acoustique comprenant une paroi de fond s'étendant dans un plan orthogonal à une direction axiale, une enceinte comprenant une première extrémité axiale solidaire de la paroi de fond, et un pavillon acoustique s'étendant à l'intérieur de l'enceinte entre un premier orifice du pavillon et un second orifice du pavillon plus petit que ledit premier orifice. Le pavillon est solidaire d'une seconde extrémité axiale, et les premier et second orifices du pavillon s'étendent chacun dans un plan orthogonal à la direction axiale.

### Objet et résumé de l'invention

L'invention vise à fournir une cellule d'absorption acoustique pour l'absorption d'ondes sonores à basses fréquences de hauteur de cavité réduite et avec un pavillon suffisamment rigide pour conserver sa géométrie malgré les vibrations mécaniques et l'excitation acoustique.

Un objet de l'invention propose une cellule d'absorption acoustique comprenant une paroi de fond s'étendant dans un plan orthogonal à une direction axiale, une enceinte comportant une première extrémité axiale solidaire de la paroi de fond, et un pavillon acoustique s'étendant à l'intérieur de l'enceinte entre un premier orifice du pavillon et un second orifice du pavillon plus petit que ledit premier orifice, le pavillon étant solidaire d'une seconde extrémité axiale de l'enceinte opposée à la première extrémité axiale, et les premier et second orifices du pavillon s'étendant chacun dans un plan orthogonal à la direction axiale.

Selon une caractéristique générale de l'invention, le pavillon comprend au moins une patte de maintien s'étendant en saillie du pavillon à l'intérieur de l'enceinte et fixée à la paroi de fond ou à l'enceinte.

Dans un premier aspect de la cellule d'absorption acoustique, la cellule peut comprendre en outre une surface poreuse fixée à la seconde extrémité axiale de ladite enceinte et couvrant le premier orifice du pavillon pour constituer un conduit permettant un écoulement non perturbé d'un flux d'air le long de la surface à l'extérieur de la cellule d'absorption acoustique.

Dans un deuxième aspect de la cellule d'absorption acoustique, le premier orifice et le second orifice du pavillon peuvent posséder une forme circulaire ou polygonale en fonction de la plage de fréquence d'absorption acoustique souhaitée.

Dans un troisième aspect de la cellule d'absorption acoustique, l'enceinte et le pavillon peuvent être en tissu synthétique imprégné de résine ou en feuille d'aluminium, et avoir une épaisseur de l'ordre du dixième de millimètre pour minimiser la masse de la cellule.

L'utilisation de tels matériau avec une telle épaisseur permet de réduire grandement le poids de la cellule d'absorption acoustique.

Selon l'invention, le pavillon comprend un col tubulaire avec une section correspondant au second orifice du pavillon, et une portion hyperbolique ou pyramidale s'étendant entre le premier orifice et le col, le col comprenant au moins deux pattes de maintien s'étendant en saillie du pavillon à l'intérieur de l'enceinte et fixées à une extrémité libre du col et à la paroi de fond ou à l'enceinte de la cellule acoustique, les pattes de maintien étant espacées les unes des autres pour définir des intervalles libres.

Une telle configuration de pavillon particulièrement étroite et allongée grâce à la présence d'un col tubulaire permet de fournir une cellule d'absorption traitant les basses fréquences sur une plage fréquentielle relativement large tout en ayant une hauteur de cellule correspondant aux cellules d'absorption classiquement autorisée pour les panneaux de traitement acoustique d'aéronef.

Un autre objet de l'invention propose un panneau de traitement acoustique destiné à être disposé sur au moins une paroi d'un aéronef en contact avec un écoulement fluidique, le panneau comprenant une pluralité de cellules d'absorption acoustique telle que définie ci-dessus.

Encore un autre objet de l'invention propose un turboréacteur comprenant au moins un panneau de traitement acoustique tel que défini ci-dessus.

Un autre objet de l'invention propose un aéronef comprenant au moins un turboréacteur tel que défini ci-dessus.

### Brève description des dessins.

L'invention sera mieux comprise à la lecture faite ci-après, à titre indicatif mais non limitatif, en référence aux dessins annexés sur lesquels :

- la figure 1 présente une vue en section d'un turboréacteur selon un mode de réalisation de l'invention, dans un plan longitudinal du turboréacteur ;
- la figure 2 illustre une vue partielle en perspective d'un panneau de traitement acoustique selon un mode de réalisation de l'invention ;
- les figures 3 et 4 présentent schématiquement une vue en perspective et une vue en coupe d'une cellule d'absorption acoustique selon un premier mode de réalisation de l'invention ;
- la figure 5 présente schématiquement une vue en coupe d'une cellule d'absorption acoustique selon un second mode de réalisation de l'invention.

Description détaillée de modes de réalisation

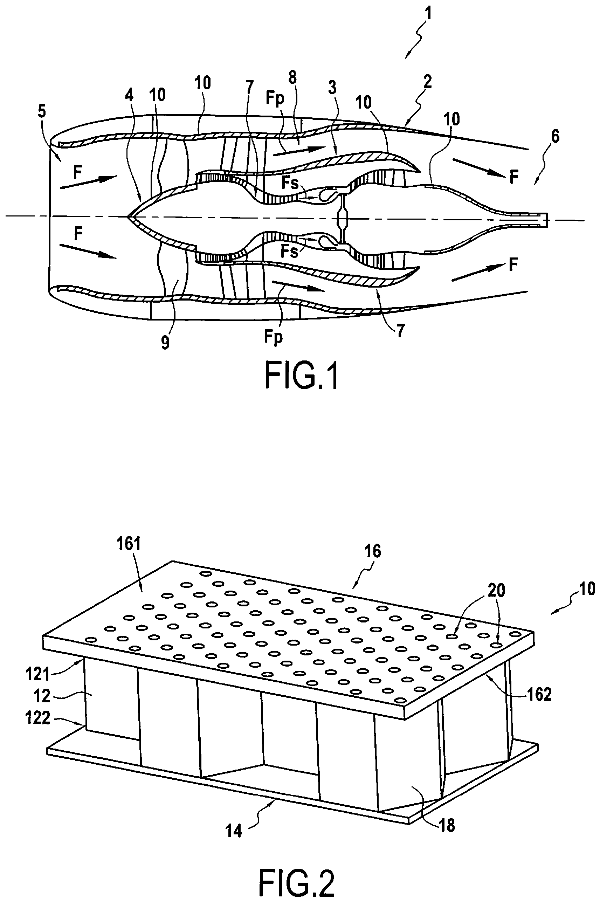

Sur la figure 1 est représentée une vue en section d'un turboréacteur 1 selon un mode de réalisation de l'invention, dans un plan longitudinal du turboréacteur 1.

Le turboréacteur 1 comprend une nacelle 2, un carter intermédiaire 3 et un carter interne 4. La nacelle 2 et les deux carters 3 et 4 sont coaxiaux. La nacelle 2 définit à une première extrémité un canal d'entrée 5 d'un écoulement de fluide et à une seconde extrémité, opposée à la première extrémité, un canal d'échappement 6 d'un écoulement de fluide. La nacelle 2 et le carter intermédiaire 3 délimitent entre eux une veine primaire 7 d'écoulement de fluide. Le carte intermédiaire 3 et le carter interne 4 délimitent entre eux une veine secondaire 8 d'écoulement de fluide. La veine primaire 7 et la veine secondaire 8 sont disposés selon une direction axiale du turboréacteur entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire $F_P$ circulant dans la veine primaire 7 et en un flux secondaire $F_S$ circulant dans la veine secondaire 8.

Le turboréacteur 1 comprend en outre au moins un panneau de traitement acoustique 10 configuré pour atténuer les ondes acoustiques émises par le turboréacteur avant que ces ondes ne s'échappent à l'extérieure, radialement, de la nacelle 2 du turboréacteur 1.

Chaque panneau de traitement acoustique 10 est configuré pour atténuer des ondes acoustiques dont la fréquence appartient à une plage de fréquences prédéterminée. Dans le mode de réalisation illustré sur la figure 1, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale et notamment sur la portion portant la soufflante 9, et, d'autre part, sur une portion en aval du carter intermédiaire 3.

Sur la figure 2 est représentée une vue partielle en perspective d'un panneau de traitement acoustique 10 selon un mode de réalisation de l'invention.

En référence à la figure 2, le panneau de traitement acoustique 10 comporte un coeur 12, une couche réfléchissante 14 et une couche d'entrée 16.

Le coeur 12 présente une structure en nid d'abeille. Plus précisément, le coeur 12 comporte une pluralité de cellules acoustiques 18, ou alvéoles, agencées selon une structure en nid d'abeille connue.

Chaque alvéole 18 débouche sur une première face 121 du coeur 12 et sur une deuxième face 122 du coeur 18 située à l'opposé de la première face 121.

La première face 121 du coeur 12 est destinée à être orientée vers la veine d'air, primaire 7 ou secondaire 8 selon l'emplacement du panneau de traitement acoustique 10. La deuxième face 122 du coeur 12 est destinée à être orientée à l'opposé de la veine d'air.

Selon le mode de réalisation, le coeur 12 peut être réalisé en métal, ou dans un matériau composite, tel qu'un matériau composite formé de fibres de carbone noyées dans une matrice de résine durcie.

La couche réfléchissante 14 est adaptée pour réfléchir des ondes acoustiques présentant une fréquence appartenant à la plage de fréquences prédéterminée.

La couche réfléchissante 14 s'étend en regard de la deuxième face 122 du coeur 12, en étant au contact de la deuxième face 122. Plus précisément, la couche réfléchissante 14 est solidaire de la deuxième face 122 du coeur 12, par exemple collée à la deuxième face 122 du coeur 12.

Selon le mode de réalisation, la couche réfléchissante 14 peut être réalisée en métal ou dans un matériau composite, tel qu'un matériau composite formé de fibres de carbone noyées dans une matrice de résine durcie. Dans une variante, la couche formant le fond des alvéoles 18 peut être non réfléchissante.

La couche d'entrée 16 s'étend en regard de la première face 121 du coeur 12, en étant au contact de la première face 121. Plus précisément, la couche d'entrée 16 est solidaire de la première face 121 du coeur 12, par exemple collée à la première face 121 du coeur 12.

La couche d'entrée 16 est une plaque monobloc perforée comprenant une pluralité d'orifices 20 traversant la couche d'entrée 16 depuis la première face 161 jusqu'à la seconde face 162 de la couche d'entrée 16. Chaque orifice 20 débouche sur une alvéole 18 du coeur 12, plusieurs orifices 20 pouvant déboucher sur une même alvéole 18.

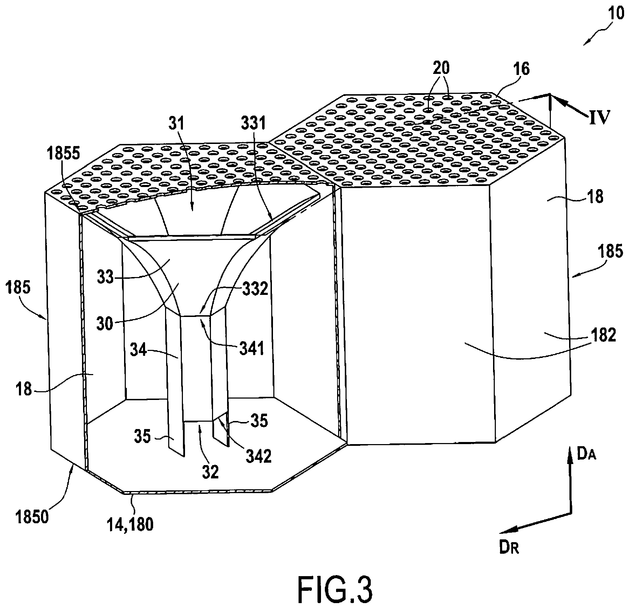

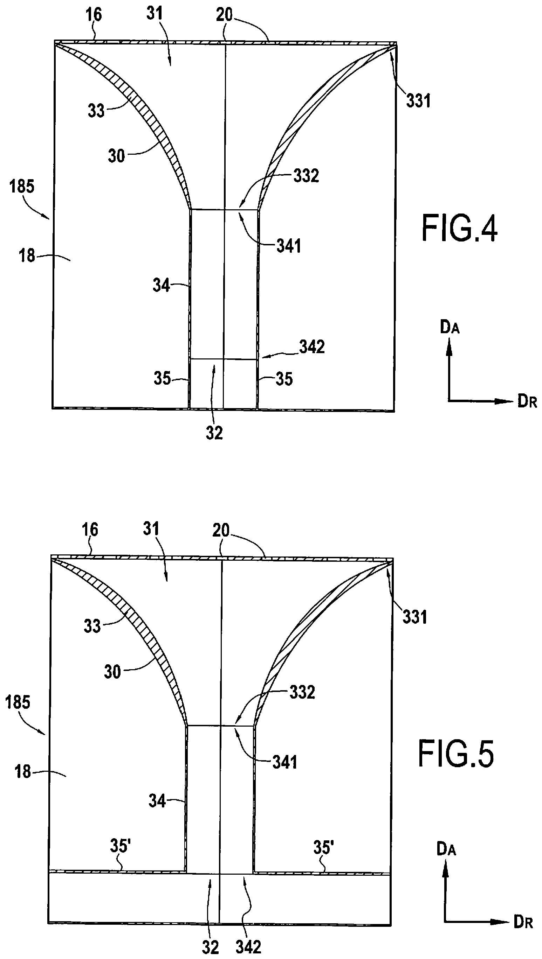

Sur les figures 3 et 4 sont représentées schématiquement une vue en perspective et une vue en coupe d'une cellule d'absorption acoustique selon un mode de réalisation de l'invention.

Chaque alvéole 18 du coeur 12 du panneau de traitement acoustique 10 comprend un paroi de fond 180 formée à partir de la couche réfléchissante 14 et six parois 182 latérales de forme rectangulaire constituées de matériau d'épaisseurs de 1 à 2 dixièmes de millimètre au maximum. Les six parois latérales 182 s'étendent en saillie depuis la paroi de fond 180 dans une direction orthogonale au plan dans lequel s'étend la paroi de fond. Les six parois latérales 182 sont agencées ensemble pour former une enceinte tubulaire 185 à base hexagonale définissant une direction axiale $D_A$ confondue avec l'axe de révolution de l'enceinte 185 et une direction radiale $D_R$ dans laquelle s'étend la paroi de fond. L'enceinte 185 comprend, dans la direction axiale $D_A$, une première extrémité 1850 axiale solidaire de la paroi de fond 180 et une seconde extrémité 1855 axiale solidaire de la plaque poreuse formant la couche d'entrée 16.

A l'intérieur de son enceinte 185, chaque alvéole 18 comprend un pavillon 30 comportant, un premier orifice 31 d'entrée, un second orifice 32 de sortie, une portion pyramidale 33 creuse à base hexagonale et un col 34. Le premier orifice 31 possède une section plus grande que la section du second orifice 32, les orifices 31 et 32 s'étendant dans un plan radial comprenant la direction radiale $D_R$, et donc parallèle au plan dans lequel s'étend la paroi de fond. Le premier orifice 31 s'étend plus particulièrement dans un plan comprenant la seconde extrémité 1855 axiale de l'enceinte 185.

Le col 34 possède une forme tubulaire à base hexagonale avec, tout le long du col, un orifice correspondant au second orifice 32. La portion pyramidale 33 du pavillon est comprise entre le premier orifice 31 et le col 34, et l'espace interne de la portion pyramidale 33 communique de manière fluidique avec l'espace interne du col 34. La portion pyramidale 33 comprend, dans la direction axiale $D_A$, une première extrémité 331 ayant pour section le premier orifice 31 et une seconde extrémité 332 ayant pour section une section correspondant à celle du second orifice 32. Le pavillon 34 comporte, dans la direction axiale $D_A$, une première extrémité 341 solidaire de la seconde extrémité 332 de la portion pyramidale, et une seconde extrémité 342 disposée en regard de la paroi de fond 180.

Le pavillon 30 est fixée au reste de l'alvéole 18 à deux hauteurs différentes dans la direction axiale $D_A$. La première extrémité 331 de la portion pyramidale 33 est fixée à la seconde extrémité 1855 axiale de l'enceinte 185, et, dans le mode de réalisation illustrée sur les figures 3 et 4, la seconde extrémité 342 du col 34 est fixée à la paroi de fond 180 via des languettes de maintien 35 s'étendant dans la direction axiale $D_A$.

Sur la figure 5 est représenté schématiquement une vue en coupe d'une cellule d'absorption acoustique selon un second mode de réalisation de l'invention. Dans cette variante de mode de réalisation, le pavillon 30 est fixé à l'alvéole 18 à l'aide d'une fixation de la première extrémité 331 de la portion pyramidale 33 à la seconde extrémité 1855 axiale de l'enceinte 185, et d'une fixation du col 34 à l'enceinte 185 via une pluralité de languettes 35' s'étendant dans la direction radiale $D_R$. Sur l'exemple illustré sur la figure 5, les languettes 35' radiales s'étendent dans la direction radiale $D_R$ depuis la seconde extrémité 342 du col 34.

Dans le mode de réalisation illustré sur les figures 3 et 4, chaque pavillon 30 inséré dans une cavité 18 est tenu par un collage à ses deux extrémités axiales, c'est-à-dire à la première axiale 331 de la portion pyramidale 33 et à la seconde extrémité 342 du col 34.

Le choix du nombre de languettes 35, ou pattes, comme leur largeur dépend de la tenue mécanique de la structure souhaitée, de la géométrie du pavillon et/ou des propriétés mécaniques des matériaux employés.

La modification de l'environnement du second orifice 32 de sortie du pavillon 30 influe sur le fonctionnement de l'alvéole acoustique 18. Elle doit être prise en compte dans le processus d'optimisation acoustique. En effet, l'adjonction des languettes 35 diminue la section de passage des ondes dans la zone concernée. Il a été noté que pour compenser cette modification, il faut :

- par rapport à un pavillon dépourvu de languettes de maintien 35 à la seconde extrémité 342 du col 34, augmenter la distance entre la seconde extrémité de col 342 et la paroi de fond 180 de la cellule acoustique 18 en diminuant la longueur du col 34 dans la direction axiale $D_A$, la hauteur dans la direction axiale $D_A$ du coeur 12 étant figée sur la base de l'encombrement maximale disponible, et

- adapter la géométrie du pavillon en procédant à une légère diminution de sa section à la seconde extrémité 332 de la portion pyramidale 33 pour conserver la fréquence d'accord de l'alvéole 18 étant donné que le col 34 est plus court.

Dans des variantes de réalisation, les formes de pavillon 30 et de col 34 peuvent adaptées à la forme de la cellule acoustique 18 retenue. Diverses formes de pavillon peuvent donc être envisagées comme par exemple des formes cylindriques, rectangulaires, carrées, ovoïdes.

L'invention permet entre autre d'industrialiser le concept de résonateur à cône pour une application aéronautique en assurant la tenue mécanique et la performance acoustique par l'ajout de pattes de maintien.

## Revendications

1. Cellule d'absorption acoustique (18) comprenant une paroi de fond (180) s'étendant dans un plan orthogonal à une direction axiale ($D_A$), une enceinte (185) comportant une première extrémité axiale (1850) solidaire de la paroi de fond (180), et un pavillon acoustique (30) s'étendant à l'intérieur de l'enceinte (185) entre un premier orifice (31) du pavillon (30) et un second orifice (32) du pavillon (30) plus petit que ledit premier orifice (31), le pavillon (30) étant solidaire d'une seconde extrémité axiale (1855) de l'enceinte (185) opposée à la première extrémité axiale (1850), et les premier et second orifices (31, 32) du pavillon (30) s'étendant chacun dans un plan orthogonal à la direction axiale ($D_A$), **caractérisé en ce que** le pavillon (30) comprend un col (34) tubulaire avec une section correspondant au second orifice (32) du pavillon (30), et une portion hyperbolique (33) ou pyramidale s'étendant entre le premier orifice (31) et le col (34), le col (34) comprenant au moins deux pattes de maintien (35, 35') s'étendant en saillie du pavillon (30) à l'intérieur de l'enceinte (185) et fixées à une extrémité libre (342) du col (34) et à la paroi de fond (180) ou à l'enceinte (185) de la cellule acoustique (18), les pattes de maintien (35, 35') étant espacées les unes des autres pour définir au moins deux intervalles libres.

**2.** Cellule d'absorption acoustique (18) selon la revendication 1, comprenant en outre une surface poreuse (16) fixée à la seconde extrémité axiale (1855) de ladite enceinte (185) et couvrant le premier orifice (31) du pavillon (30).

**3.** Cellule d'absorption acoustique (18) selon l'une des revendications 1 ou 2, dans lequel le premier orifice (31) et le second orifice (32) du pavillon (30) possèdent une forme circulaire ou polygonale.

**4.** Cellule d'absorption acoustique (18) selon l'une des revendications 1 à 3, dans lequel l'enceinte (185) et le pavillon (30) sont en tissu synthétique imprégné de résine ou en feuille d'aluminium, et ont une épaisseur de l'ordre du dixième de millimètre.

**5.** Panneau (10) de traitement acoustique destiné à être disposé sur au moins une paroi d'un aéronef en contact avec un écoulement fluidique (F, $F_P$, $F_S$), le panneau (10) comprenant une pluralité de cellules d'absorption acoustique (18) selon l'une des revendications 1 à 4.

**6.** Turboréacteur (1) destiné à être monté sur un aéronef, le turboréacteur (1) comprenant au moins un panneau de traitement acoustique (10) selon la revendication 5.

**7.** Aéronef comprenant au moins un turboréacteur (1) selon la revendication 6.


**Patentansprüche**

**1.** Schallabsorptionszelle (18), umfassend eine Bodenwand (180), die sich in einer Ebene orthogonal zu einer axialen Richtung ($D_A$) erstreckt, eine Einhausung (185), die ein erstes axiales Ende (1850) beinhaltet, das fest mit der Bodenwand (180) verbunden ist, und einen Schalltrichter (30), der sich von einem Inneren der Einhausung (185) zwischen einer ersten Öffnung (31) des Trichters (30) und einer zweiten Öffnung (32) des Trichters (30) erstreckt, die kleiner ist als die erste Öffnung (31), wobei der Trichter (30) mit einem zweiten axialen Ende (1855) der Einhausung (185), die dem ersten axialen Ende (1850) gegenüberliegt, fest verbunden ist, und die erste und zweite Öffnung (31, 32) des Trichters (30) sich jeweils in einer Ebene orthogonal zu der axialen Richtung ($D_A$) erstrecken, **dadurch gekennzeichnet, dass** der Trichter (30) einen röhrenförmigen Hals (34) mit einem Querschnitt, welcher der zweiten Öffnung (32) des Trichters (30) entspricht, und einen hyperbolischen oder pyramidenförmigen Abschnitt (33) umfasst, der sich zwischen der ersten Öffnung (31) und dem Hals (34) erstreckt, wobei der Hals (34) zumindest zwei Haltelaschen (35, 35') umfasst, die sich von dem Trichter (30) wegragend im Inneren der Einhausung (185) erstrecken und an einem freien Ende (342) des Halses (34) und an der Bodenwand (180) oder an der Einhausung (185) der Schallzelle (18) befestigt sind, wobei die Haltelaschen (35, 35') voneinander beabstandet sind, um zumindest zwei freie Intervalle zu definieren.

**2.** Schallabsorptionszelle (18) nach Anspruch 1, ferner umfassend eine poröse Oberfläche (16), die an dem zweiten axialen Ende (1855) der Einhausung (185) befestigt ist und die erste Öffnung (31) des Trichters (30) bedeckt.

**3.** Schallabsorptionszelle (18) nach einem der Ansprüche 1 oder 2, wobei die erste Öffnung (31) und die zweite Öffnung (32) des Trichters (30) eine kreisförmige oder vieleckige Form besitzen.

**4.** Schallabsorptionszelle (18) nach einem der Ansprüche 1 bis 3, wobei die Einhausung (185) und der Trichter (30) aus harzimprägniertem synthetischem Gewebe oder aus Aluminiumfolie bestehen und eine Dicke in der Größenordnung von Zehntel-Millimetern aufweisen.

**5.** Schalldämmplatte (10), die dazu vorgesehen ist, an zumindest einer Wand eines Luftfahrzeugs in Kontakt mit einer Fluidströmung (F, $F_P$, $F_S$) angeordnet zu werden, wobei die Platte (10) mehrere Schallabsorptionszellen (18) nach einem der Ansprüche 1 bis 4 umfasst.

**6.** Turbinenstrahltriebwerk (1), das dazu vorgesehen ist, an einem Luftfahrzeug montiert zu werden, wobei das Turbinenstrahltriebwerk (1) zumindest eine Schalldämmplatte (10) nach Anspruch 5 umfasst.

**7.** Luftfahrzeug, umfassend zumindest ein Turbinenstrahltriebwerk (1) nach Anspruch 6.


**Claims**

**1.** An acoustic absorption cell (18) comprising a bottom wall (180) extending in a plane orthogonal to an axial direction ($D_A$), an enclosure (185) including a first axial end (1850) secured to the bottom wall (180), and an acoustic horn (30) extending inside the enclosure (185) between a first opening (31) of the horn (30) and a second opening (32) of the horn (30) smaller than said first opening (31), the horn (30) being secured to a second axial end (1855) of the enclosure (185) opposite the first axial end (1850), and the first and second openings (31, 32) of the horn (30) each extending in a plane orthogonal to the axial direction ($D_A$),

**characterized in that** the horn (30) comprises a tubular neck (34) with a section corresponding to the second opening (32) of the horn (30), and a hyperbolic or pyramidal portion (33) extending between the first opening (31) and the neck (34), the neck (34) comprising at least two retaining arms (35, 35') protruding from the horn (30) inside the enclosure (185) and fixed to a free end (342) of the neck (34) and to the bottom wall (180) or to the enclosure (185) of the acoustic cell (18), the retaining arms (35, 35') being spaced apart from each other to define at least two free gaps.

2. The acoustic absorption cell (18) according to claim 1, further comprising a porous surface (16) fixed to the second axial end (1855) of said enclosure (185) and covering the first opening (31) of the horn (30).

3. The acoustic absorption cell (18) according to any of claims 1 or 2, wherein the first opening (31) and the second opening (32) of the horn (30) have a circular or polygonal shape.

4. The acoustic absorption cell (18) according to any of claims 1 to 3, wherein the enclosure (185) and the horn (30) are made of synthetic fabric impregnated with resin or of aluminum foil, and have a thickness on the order of a tenth of a millimeter.

5. An acoustic treatment panel (10) intended to be disposed on at least one wall of an aircraft in contact with a fluid flow (F, $F_P$, $F_S$), the panel (10) comprising a plurality of acoustic absorption cells (18) according to any of claims 1 to 4.

6. A turbojet engine (1) intended to be mounted on an aircraft, the turbojet engine (1) comprising at least one acoustic treatment panel (10) according to claim 5.

7. An aircraft comprising at least one turbojet engine (1) according to claim 6.

FIG.1

FIG.2

FIG.3

16   31   20

33

30

331

185

332

18

341

34

342

35   35

32

FIG.4

D_A

D_R

16   31   20

33

30

331

185

332

18

341

34

35'   35'

32   342

FIG.5

D_A

D_R

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3887031 A